# EUROPEAN PATENT APPLICATION

(11) **EP 1 992 229 A1**
(43) Date of publication of application: **19.11.2008**
(21) Application number: 07108118.6
(22) Date of filing: 14.05.2007
(51) Int. Cl.: A01N 53/06, A01N 53/02, A01N 25/10, A01N 25/02, A01P 7/04

(54) **Sustained released insecticidal compositions**

(71) Applicant: Sara Lee/DE N.V., 3532 AA Utrecht (NL)
(72) Inventor: Monsonis Güell, Eduard, 08023, Barcelona (ES); Cortès Barea, Jordi, 08203, Sabadell (ES)
(74) Representative: van Loon, C.J.J.

(57) **Abstract**

An insecticidal formulation is provided which can be readily applied on a surface, and which results in an insecticidal composition from which insecticide is released over time, without the need to apply an additional energy source. The formulation comprises a volatile insecticide, preferably a volatile pyrethroid insecticide, a solvent soluble polymer, preferably a solvent soluble resin, and a solvent for the polymer.

## Description

### Field of the Invention

The invention pertains to an insecticidal formulation. More particularly, the invention pertains to an insecticidal formulation which can be readily applied on a surface, e.g. as a coating, and to an insecticidal composition resulting from such application.

### Background of the Invention

A background to the invention is formed by insecticidal coatings which serve to exterminate insects by direct contact.

Thus, US 5,912,003 refers to a spray-type insecticidal paint containing a pyrethroid insecticide, an organic acrylic resin, an insect attractant, a propellant and a solvent.

US 4,997,650 refers to an insecticidal resin coating film comprising a combination of an acrylonitrile and/or methacrylonitrile copolymer resin and an insecticidal compound. The film is formed on a substrate and serves to exterminate insects which crawl thereon.

Another background to the invention is formed by insecticidal sprays and the like which serve to load the sprayed atmosphere with insecticide.

Volatile insecticides are absorbed on paper, and exert their efficacy through static evaporation. These papers are not ready-to-use formulations. Also, it were desired to provide formulations which allow a controlled release rate of the insecticide to the air, for long durations.

Existing insecticidal formulations do not provide, as is desired, the possibility to load an atmosphere with volatile insecticide without applying extra energy, or to exterminate insects without requiring the insect to approach and get directly in touch with the formulation. Also, existing formulations do not provide possibility, as is desired, to have a controlled release of an insecticide without additional energy sources. Further, it is desired to obtain these and other advantageous types of insecticidal efficacy in the form of a ready-to-use insecticidal formulation which can be applied by anyone, preferably on any surface. Yet another desire is to provide insecticidal formulations which can be used in such a way as to minimize the human exposure to insecticidal active ingredients.

Pyrethroid insecticides are a group of man-made pesticides similar to the natural pesticide pyrethrum, which is produced by chrysanthemum flowers. Several pyrethroids exist of different chemical and physical properties. Some of them are volatile, however just few of them are volatile at room temperature and capable of evaporating without additional energy.

### Summary of the Invention

Seeking to satisfy the above and other objectives, the invention, in one aspect provides an insecticidal formulation comprising a volatile insecticide, preferably a volatile pyrethroid, a solvent-soluble polymer, and a solvent.

In another aspect, the invention provides an insecticidal composition, comprising a volatile insecticide, preferably a volatile pyrethroid, blended with a polymer of solvent-soluble type, and preferably contained in a matrix of said polymer. More particularly, the invention provides an insecticidal composition obtainable by providing a formulation of the aforementioned type, and allowing the solvent to evaporate.

In yet another aspect, the invention provides a method of coating a surface with an insecticidal coating, comprising coating the surface with a formulation of the aforementioned type, and allowing the solvent to evaporate in order to obtain an insecticidal active coating.

The invention, in a further aspect, embodies the use of a volatile insecticide, preferably a volatile pyrethroid insecticide, in an insecticidal coating formulation, notably a ready-to-apply coating formulation. Also, an aspect of the invention is the use of a solvent-soluble resin in a ready-to-apply insecticidal coating composition.

### Detailed Description of the Invention

With reference to the various expressions used to define the invention, it is noted that in the context of the invention the term 'formulation' is used for the situation before application, i.e. for any composition which contains at least some amount of solvent to be evaporated, and which can be applied as a coating or film. The term "composition" is used to denote the situation after such full evaporation of the solvent that the end-result, i.e. a coating of film comprising insecticide, is formed.

The invention judiciously combines the evaporative properties of volatile insecticides, preferably volatile pyrethroid insecticides, with the coating and matrix-forming properties of solvent-soluble polymers, preferably solvent-soluble resins.

The insecticide preferably is selected from the group consisting of metofluthrin, transfluthrin, empenthrin, and mixtures thereof. Preferably, the invention targets, besides mosquitoes, also flies and/or moths. To this end transfluthrin and empenthrin are further preferred, while for mosquitoes and flies metofluthrin and transfluthrin are preferred.

The formulation comprises a solvent-soluble polymer, and a solvent for said polymer. The invention thus provides a formulation which is yet unhardened, and which can be readily used to coat surfaces, comprising dissolved polymer and insecticide and, optionally, additives if necessary. After allowing the solvent to evaporate, the remaining ingredients will form a resulting composition, e.g. as a film coated on a surface. The polymer will serve as a carrier, or a matrix, from which the insecticide can be released over time.

Suitable solvent-soluble polymers include for example the following cellulose derivatives, such as hydroxyethylcellulose, ethylcellulose, methylcellulose , hydroxypropylcellulose, and others. These are generally soluble in solvents such as alcohols, ketones, halogenated solvents, and other suitable organic solvents. Acrylic polymers, such as acrylic vinyl-acetate copolymer, silicone-acrylate copolymer, and others, polyamides, polyimides. Many such polymers are soluble in co-solvent mixes (e.g. toluene, butanol) or alcohols. Copolyesters, as are e.g. soluble in ketones, toluene. Once apprised of this invention, the person of ordinary skill in the art will know about solvent-soluble polymers, and will be able, without undue experimentation, to find a suitable solvent for a selected solvent-soluble polymer.

Preferably the polymer is a hydrocarbon resin. The present invention particularly relates to resins that are solvent soluble. Without theory to be considered as binding, the inventors believe that the mechanism of hardening through evaporation of solvent, provides for the optimal polymer structure in which insecticide can be held and be capable of release during use.

A preferred hydrocarbon resin is hydrogenated styrene/methyl styrene/Indene copolymer Regalite^{™} R1100 Hydrocarbon Resin of Eastman Chemical Company. The main organic solvents used for the Regalite^{™} that copolymers resins are aliphatic hydrocarbons (non polar solvents). Also possible are halogenated (dichloromethane, chloroform, etc.) or aromatic (toluene, xylene, etc.) solvents.

A further preferred solvent, but not restricted to those and/or exact composition, are the Isopar^{™} solvents from Exxon Mobil. These are mixtures of aliphatic hydrocarbons obtained from distillation from petroleum derivatives. Other possible solvents are aliphatic hydrocarbons of the type CₙH₂ₙ₊₂ and CₙH₂ₙ being *n* an integer greater than 4.

According to the invention, mixtures of polymers and/or resins, as well as mixtures of solvents, can also be used.

The formulation, i.e. before evaporation of solvent, comprises the solvent in an amount which is at least sufficient for the formulation to be applicable as a coating. Depending on the desired thickness of the coating layer, more solvent can be used. E.g., at the high end of the amounts of solvent used in the invention, the formulation will be a readily flowing, water-thin liquid capable of forming a thin film on a surface. The amount of polymer present, will at least be sufficient for a coating layer to be actually formed upon evaporation of the solvent.

Preferably, in the formulation the solvent is present in an amount of 10% to 70% by weight, and more preferably 20-60 % by weight. The resin is preferably present in the formulation in an amount of from 1% to 60% by weight, and more preferably of from 15 to 45 % by weight in the liquid formulation.

The active ingredient, i.e. the insecticide, can be present in the formulation in a wide range of quantities. The minimum desired quantity will be determined by the possibility to at least exert some effect, the maximum will generally be determined by the polymer and solvent-combination chosen, and in many instances will preferably be as high as possible. A generally preferred range is of from 0,01% to 60% by weight of the active ingredient.

Hydrocarbon resins are preferred polymers, int.al. because the typical resin structure will, after evaporation of the solvent, allow the greatest quantities of active ingredient to be held in the resulting composition.

In the composition, after evaporation of the solvent, the resulting quantities of polymer and insecticide are proportionally related to the amount of solvent evaporated, the latter preferably being to a full extent, i.e. leaving no solvent (or only residues at ppm scale) behind.

The formulation and resulting composition can comprise additives and adjuvants as customary in insecticides and coating, as e.g. UV light stabilizers, antioxidation preservatives, and other additives known to the skilled person.

It will be appreciated, based on the above detailed description, that the invention not only resides in a formulation and a composition. Thus, with the present invention the inventors have also found a novel and beneficial use for volatile insecticides, preferably volatile pyrethroid insecticides, and more preferably of volatile pyrethroid insecticides selected from the group consisting of metofluthrin, transfluthrin, empenthrin, and mixtures thereof. Similarly, the present invention resides in a novel and beneficial use of solvent soluble polymers, preferably solvent soluble hydrocarbon resins.

The formulations of the present invention can be applied on surfaces of any kind, in manners as are customary for applying coatings and films, e.g. by spraying.

The formulations of the invention result in a composition from which insecticide evaporates, thus allowing to reach insects in any place in the room - or other environment - in which the formulation is applied, rather than by contact only.

The formulations of the invention allow evaporation of the active ingredient at a constant rate, with a controlled duration. The product can be of much longer duration than existing insecticide-releasing products such as impregnated papers.

The formulations of the invention are intended to allow evaporation of solvent without applying additional energy. However, if it were desired to speed up the evaporation, added energy such as heat or air flow can be used.

The formulations of the invention can be manufactured relatively simply by mixing the ingredients, preferably by first dissolving the polymer, and then adding the insecticide. The insecticide can be added as such, or also as a solution.

The invention will hereinafter be further explained with reference to the following, unlimitative examples and Figures.

### Figure 1

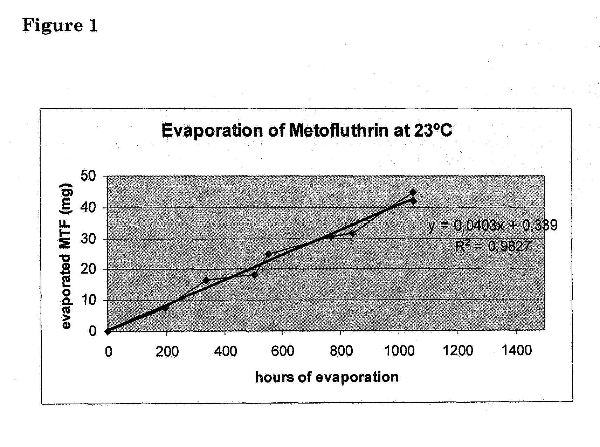

Figure 1 is a graphical representation of the evaporation of methofluthrin, with the horizontal axis representing time, expressed in hours, and the vertical axis representing the quantity of metofluthrin evaporated, expressed in mg.

### Example 1

A formulation is made by mixing of hydrogenated styrene/methyl styrene/Indene copolymer Regalite^{™} R1100 resin, 23.00% by weight, Isopar^{™} G solvent, 54.00 wt.%, acetone cosolvent, 15.00 wt.% and MTF TG (methofluthrin insecticide), 8.00 wt.%. The formulation is applied onto a surface, and the solvent is allowed to evaporate.

Efficacy is tested at 22-25°C in a Peet Grady cabinet. Sample: 900 cm2 of a surface impregnated with the said formulation. Quantity of formulation in the impregnation: 875 mg. Quantity of Metofluthrin (active ingredient) in the impregnation: 70 mg. Insect: Mosquito Culex Pippiens.

Results, see the table below. KT50 (Killing Time 50) is the time needed to kill the 50% of the mosquitoes. This is a common measure of the efficacy of an insecticide in standard test conditions as a Peet Grady chamber.

**Table**

| hours | KT₅₀ (min) | |
|---|---|---|
| **24** | 18.61 | effective |
| **72** | 17.52 | effective |
| **96** | 13.93 | effective |
| **168** | 15.77 | effective |
| **504** | 17.77 | effective |
| **528** | 19.47 | effective |
| **600** | 26.74 | effective |
| **672** | 39.7 | effective |
| **720** | 24.71 | effective |
| **744** | 28 | effective |
| **768** | 21.62 | effective |
| **840** | 54.74 | not effective |

Conclusion: tested samples have a minimum efficient life of approx 800 hours.

The evaporation rate of methofluthrin is also determined. Conditions are the above temperature, and a low airflow (0,01-0,15 m/s). The remaining metofluthrin is monitored in a series of identical varnished surfaces. Results are given in the graph of Figure 1. It is concluded that the evaporation of the active ingredient is quite constant along the life of the product (the monitoring of remaining Metofluthrin in the samples was made till the efficacy started to decrease).

### Example 2

A formulation is made by mixing of EC22 Aqualon® Ethylcellulose (Hercules Group), 6.30% by weight, EC200 Aqualon® Ethylcellulose (Hercules Group), 2.50 wt.%, methyl isobutyl ketone solvent, 19.00 wt.%, acetone cosolvent, 63.50.00 wt.% and MTF TG (methofluthrin insecticide), 8.90 wt.%. The formulation is applied onto a surface, and the solvent is allowed to evaporate.

The evaporation rate of the active ingredient is determined at 22-24°C under low air flow (0,01-0,15 m/s). The release rate is almost the same (0.97 times) that of the formulation of Example 1, which means approximately the same efficacy as the formulation in Example 1.

## Claims

1. An insecticidal formulation comprising a volatile insecticide, a solvent-soluble polymer, and a solvent.

2. A formulation according to claim 1, wherein the volatile insecticide is a volatile pyrethroid insecticide, preferably selected from the group consisting of metofluthrin, transfluthrin, empenthrin, and mixtures thereof.

3. A formulation according to claim 1 or 2, wherein the polymer is a hydrocarbon resin, preferably a copolymer of hydrogenated styrene, methyl styrene, and indene.

4. An insecticidal composition, comprising a volatile insecticide blended with a polymer of solvent-soluble type.

5. A composition according to claim 4, wherein the insecticide is blended such as to be divided over a polymer matrix structure.

6. An insecticidal composition obtainable by providing a formulation according to any one of claims 1-3, and allowing the solvent to evaporate.

7. A composition according to claim 6, wherein, prior to full evaporation, the formulation is applied on a surface.

8. A method of providing a surface with an insecticidal coating, comprising coating the surface with a formulation according to any one of claims 1-3, and allowing the solvent to evaporate.

9. The use of a volatile insecticide, preferably a volatile pyrethroid insecticide, in a ready-to-apply insecticidal coating formulation

10. The use of a solvent-soluble resin in a ready-to-apply insecticidal coating composition.
